# EUROPEAN PATENT APPLICATION

(11) **EP 1 411 574 A2**
(43) Date of publication of application: **21.04.2004**
(21) Application number: 03256213.4
(22) Date of filing: 02.10.2003
(51) Int. Cl.: H01M 8/12, H01M 8/04

(54) **Fuel cell**

(30) Priority: 08.10.2002 JP 2002295208
(71) Applicant: SHINKO ELECTRIC INDUSTRIES CO. LTD., Nagano-shi, Nagano 380-0921 (JP)
(72) Inventor: Horiuchi, Michio, Nagano-shi Nagano 380-0921 (JP); Suganuma, Shigeaki, Nagano-shi Nagano 380-0921 (JP); Watanabe, Misa, Nagano-shi Nagano 380-0921 (JP)
(74) Representative: Rackham, Stephen Neil

(57) **Abstract**

A fuel cell, comprises a fuel cell element (16) comprising a solid electrolyte layer (10) of oxygen ion conduction type which is interposed between a cathode layer (12) and an anode layer (14). The cathode layer (12) and the anode layer (14) are exposed to a mixed gas of a fuel gas, such as methane or others, and oxygen, to cause an oxidation-reduction reaction between the fuel gas and the oxygen, by means of the cell element (16), to generate an electromotive force. The anode layer (14) is mainly composed of a metal which is oxidation-resistant against the mixed fuel at the operating temperature of the fuel cell element (16), or a ceramic having an electroconductivity. The anode layer (14) is further blended with a metal or an oxide thereof, selected from rhodium, platinum, ruthenium, palladium, and iridium.

## Description

The present invention relates to a fuel cell and, more particularly, to a fuel cell comprising a container which has a feed port or ports for a mixed fuel gas containing a fuel gas such as methane and oxygen, and an exhaust port or ports for an exhaust gas, and in which an element or elements of the fuel cell are accommodated.

A fuel cell is expected to have high efficiency in power generation compared with power generation in a thermal power plant, and various studies are currently being carried out.

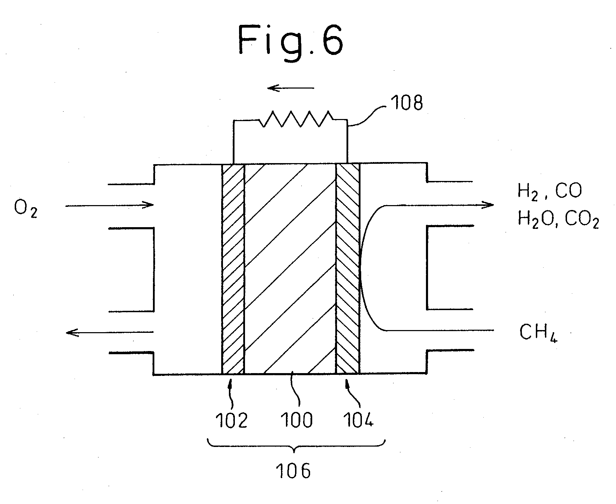

As shown in Fig. 6, such a conventional fuel cell is provided with an element 106 for the fuel cell, which element uses, as a solid electrolyte layer 100 of an oxygen ion conduction type, a fired body made of stabilized zirconia to which yttria (yttrium oxide) (Y₂O₃) is added, the solid electrolyte layer 100 having one side on which a cathode layer 102 is formed, and another side on which an anode layer 104 is formed.

Oxygen or oxygen-containing gas is fed to the side of the cathode layer 102 of the fuel cell element 106, and a fuel gas such as methane is fed to the side of the anode layer 104. This fuel cell defines a separate chamber type in which a first chamber on the side for feeding the fuel gas and a second chamber on the side for feeding the oxygen or oxygen-containing gas are separated by the fuel cell element 106. The oxygen (O₂) fed to the side of the cathode layer 102 of the fuel cell element 106 is ionized into oxygen ions (O²⁻) at a boundary between the cathode layer 102 and the solid electrolyte layer 100, and the oxygen ions are conducted to the anode layer 104 by the electrolyte layer 100. The oxygen ions (O²⁻) conducted to the anode layer 104 react with the methane (CH₄) gas fed to the side of the anode layer 104, to thereby create water (H₂O), carbon dioxide (CO₂), hydrogen (H₂) and carbon monoxide (CO). During the reaction, the oxygen ions release electrons, resulting in a potential difference between the cathode layer 102 and the anode layer 104. Accordingly, by establishing the electrical connection between the cathode layer 102 to the anode layer 104 by a lead wire 108, the electrons of the anode layer 104 pass in the direction, shown by an arrow in Fig. 6, toward the cathode layer 102 through the lead wire 108, and electricity can be produced by the fuel cell.

In this regard, the fuel cell shown in Fig. 6 is operated at a temperature of approximately 1000°C.

In the fuel cell shown in Fig. 6, however, the side of cathode layer 102 is exposed to an oxidative atmosphere, and the side of anode layer 104 is exposed to a reducing atmosphere, each at a high temperature. As a result, it has been difficult to enhance the durability of the fuel cell element 106.

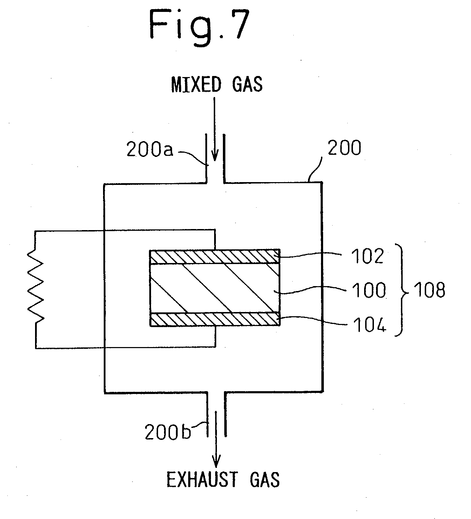

On the other hand, it is reported, as shown in Fig. 7, that even when a fuel cell element 106 formed of a solid electrolyte layer 100, a cathode layer 102 and an anode layer 104 respectively formed on one side and another side of the electrolyte layer 100, is placed in a mixed fuel gas of the methane and oxygen, the fuel cell element 106 develops an electromotive force (see, for example, SCIENCE, Vol. 288 (2000), p2031 to 2033; and Journal of the Electrochemical Society, 149 (2) A133 to A136 (2002)).

By placing the fuel cell element 106 in the mixed fuel gas as in the fuel cell shown in Fig. 7, the fuel cell element 106 can be enveloped as a whole in substantially the same atmosphere, and can have improved durability in comparison with the fuel cell element 106 shown in Fig. 6 in which the respective sides of the element 106 are exposed to atmospheres different from each other. Therefore, this fuel cell shown in Fig. 7 defines a single chamber type into which the mixed fuel gas of a fuel gas and oxygen or oxygen-containing gas, is fed.

Nevertheless, as the mixed fuel gas of methane and oxygen is fed to the fuel cell shown in Fig. 7 at a high temperature (of approximately 1000°C), the mixed fuel gas is adjusted so that a concentration of the oxygen is lower than the ignition limit concentration of oxygen (a concentration of the methane is as high as exceeding the ignition limit), in order to avoid a risk of explosion.

For this reason, with the mixed fuel gas fed to the fuel cell, an amount of oxygen is too low for the fuel such as methane to be completely burnt, and the fuel may be carbonized to thereby deteriorate the performance of the fuel cell.

To solve such a problem, the present inventors have proposed a fuel cell in US 2003/0054222 A1 (published on March 20, 2003), using a mixed fuel gas of methane or others and oxygen, in which a concentration of oxygen increases to an extent capable of preventing the progress of the carbonization of the fuel while avoiding the explosion of the mixed fuel gas.

This fuel cell is provided with a container having a feed port or ports for mixed gas of fuel gas such as methane and oxygen and an exhaust port or ports for exhaust gas, in which fuel cell elements are accommodated, wherein a space in the interior of the container except for the fuel cell elements, through which the mixed fuel gas or the exhaust gas flows, is filled with packing materials, so that a gap between the adjacent packing materials is one at which the mixed fuel gas cannot be ignited under the operating condition of the fuel cell even if the mixed fuel gas has an oxygen concentration within the ignition limit for the mixed fuel gas.

According to the fuel cell proposed by the present inventors, it is possible to use the mixed fuel gas within the ignition limit, and to thereby accelerate the complete combustion thereof as well as enhance the performance of the cell.

However, as the oxygen concentration in the mixed fuel gas is increased, nickel or a nickel cermet used for the anode layer (fuel pole) is liable to be oxidized.

It has been found that, if the nickel forming the anode layer is oxidized, the electrode resistance becomes larger to result in the deterioration of the power generating efficiency, or in the impossibility of the power generation and, further, the anode layer is liable to peel off.

Thus, an object of the present invention is to provide a fuel cell capable of maintaining an electric conductivity in the anode layer and the fuel pole performance even if a partial pressure of oxygen in the mixed fuel gas, such as methane and oxygen, used as a raw material gas becomes higher.

The present inventors have diligently studied to solve the above-mentioned problem, and found that according to a fuel cell having an anode layer in which an oxidation catalyst such as platinum is blended in fired material mainly composed of NiO in which Li is dissolved to form a solid solution, it is possible to maintain a fuel cell performance of the anode layer and exhibit a high power generating performance even if the partial pressure of oxygen is high in the mixed fuel gas as a raw material gas. Thus, the present invention has been achieved.

According to the present invention, there is provided a fuel cell comprising: at least one fuel cell element, comprising a solid electrolyte layer of oxygen ion conduction type which is interposed between a cathode layer and an anode layer; means for supplying a mixed fuel gas of a fuel gas, such as methane or others, and oxygen, to which both the cathode layer and the anode layer are exposed to cause an oxidation-reduction (redox) reaction between the fuel gas and the oxygen by means of the cell element to generate an electromotive force; the anode layer being mainly composed of a metal which is oxidation-resistant against the mixed fuel at an operating temperature of the fuel cell element, or a ceramic having an electro-conductivity; and the anode layer being further blended with a metal or oxide thereof, selected from a group of rhodium, platinum, ruthenium, palladium, and iridium.

The anode layer is formed of fired material mainly composed of NiO in which Li is dissolved to form a solid solution. The fired material may be obtained by adding an Li-compound to Ni-oxide, which is then subjected to firing treatment. The fired material may be a fired body obtained by firing Ni oxide to which an Li-compound is added in a range from 1 to 15 mol% calculated in terms of Li₂O.

The metal which is oxidation-resistant against the mixed fuel may be silver.

The metal or oxide thereof selected from a group of rhodium, platinum, ruthenium, palladium, and iridium, may be blended in the anode layer in a range from 1 to 50 vol% calculated in terms of metal.

The anode layer may contain, as an auxiliary component, one of samaria-doped ceria, scandia-stabilized zirconia, and yttria-stabilized zirconia at 50 vol% or less.

According to another aspect of the present invention, there is provided a fuel cell comprising: a container having at least one feed port and at least one exhaust port; a stack of fuel cell elements contained in the container, each of the elements comprising a solid electrolyte layer of an oxygen ion conduction type interposed between a cathode layer and an anode layer; means for supplying a mixed fuel gas of a fuel gas, such as methane or others, and oxygen, through the feed port, so that both the cathode layer and the anode layer are exposed to cause an oxidation-reduction (redox) reaction between the fuel gas and the oxygen by means of the cell element to generate an electromotive force and for discharging an exhaust gas through the exhaust port; the anode layer being mainly composed of a metal which is oxidation-resistant against the mixed fuel at the operating temperature of the fuel cell element, or a ceramic having an electro-conductivity; and the anode layer being further blended with a metal or oxide thereof, selected from a group of rhodium, platinum, ruthenium, palladium, and iridium.

The container may define therein first and second spaces, except for a region where the stack of fuel cell elements occupy, the feed and exhaust ports being communicated with the first and second spaces, respectively; and the first and second spaces may be filled with packing materials, so that a gap between the materials is a distance which makes it impossible to ignite the mixed fuel gas even if fuel gas has an oxygen concentration within an ignition limit.

The packing materials are powdery particles, porous materials, or fine tubes, formed of a metal selected from a group of Ti, Cr, Te, Co, Ni, Cu, Al, Mo, Rh, Pd, Ag, W, Pt and Au or an alloy consisting two or more of them, or ceramic containing one or more selected from a group consisting of Mg, Al, Si and Zr.

The stack of fuel cell elements may be accommodated in the container so that the cathode layer and the anode layer forming each fuel cell element are disposed parallel to a flowing direction of the mixed fuel gas.

The stack of fuel cell elements may be accommodated in the container so that the cathode layer and the anode layer forming each fuel cell element are disposed perpendicular to a flowing direction of the mixed fuel gas. In this case, the cathode layer, the anode layer and the solid electrolyte layer are made of porous material.

The fuel cell further comprises a heating means for heating the stack of fuel cell elements and cooling means for cooling the first and second spaces.

### BRIEF DESCRIPTION OF THE DRAWINGS

Fig. 1 is a side sectional view of one embodiment of a fuel cell according to the present invention for explaining the construction thereof;
Fig. 2 is a side sectional view of another embodiment of a fuel cell according to the present invention for explaining the construction thereof;
Fig. 3 is a side sectional view of a further embodiment of a fuel cell according to the present invention for explaining the construction thereof;
Fig. 4 is a partially sectional view of a device used in the embodiment;
Fig. 5 shows graphs plotting measured power densities relative to the electric current densities while varying a butane concentration from 8 to 15 vol% in a mixed fuel gas fed to an obtained unit cell;
Fig. 6 schematically illustrates a fuel cell of the prior art; and
Fig. 7 schematically illustrates an improved fuel cell.

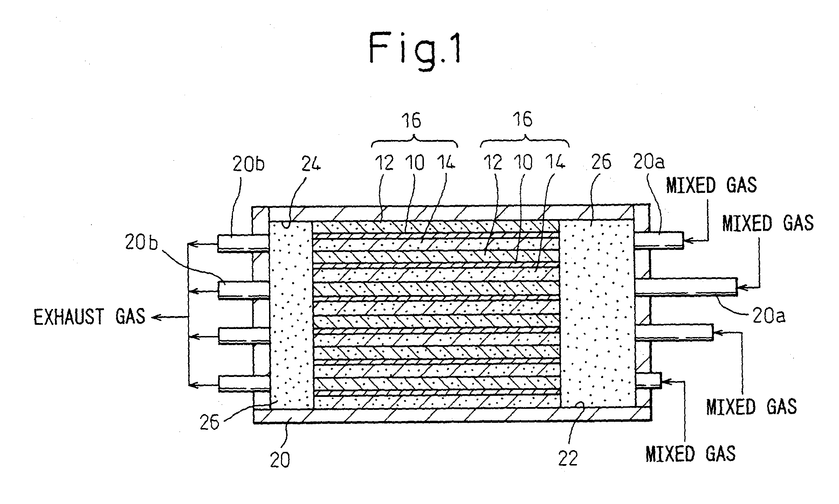

Fig. 1 is a side sectional view of one embodiment of a fuel cell according to the present invention. In the fuel cell shown in Fig. 1, a stack of unit fuel cell elements is used, in which a plurality of unit fuel cell elements 16, 16 are stacked together. The unit fuel cell elements 16 are accommodated in a container of a rectangular or circular cross-section having a plurality of feed pipes 20a, 20a for feeding a mixture of a fuel gas such as methane and oxygen (hereinafter referred to as a mixed fuel gas) and a plurality of exhaust pipes 20b, 20b for discharging exhaust gas. The unit fuel cell elements 16 are arranged so that each of a fuel cell stack surface thereof is vertical to the radial direction of the tube (container).

The container 20 is formed of a thermally resistant material, such as ceramic, capable of withstanding a high temperature of up to approximately 1200°C, so as to show sufficient thermal resistance at an operating temperature of the fuel cell. Each of the unit fuel cell elements 16 forming the fuel cell stack includes a solid electrolyte layer 10 having a dense structure, a porous cathode layer 12 formed on one side the solid electrolyte layer 10 and a porous anode layer 14 formed on the other side thereof.

The anode layer 14 of the fuel cell element 16 is directly joined to the cathode layer 12 of the adjacent fuel cell element 16 to form the fuel cell stack. Electricity generated by the fuel cell stack is taken out by a leads (not shown) connected to the cathode layer 12 of the unit fuel cell element 16 located in the outermost layer of the fuel cell stack and to the anode layer 14 of the unit fuel cell element 16 located in the opposite outermost layer of the fuel cell stack.

The solid electrolyte layer 10 forming the unit fuel cell element 16 shown in Fig. 1 is an oxygen ion conductor and is formed of zirconium oxide partially stabilized by an element of group III of the periodic table, such as yttrium (Y) or scandium (Sc), or cerium oxide doped with, for example, samarium (Sm) or gadolinium (Gd).

Further, the cathode layer 12 is formed of a manganite, a gallate or a cobaltite compound of lantathanum to which an element of group III of the periodic table, such as strontium (Sr) is added.

The anode layer 14 is mainly formed of metal which is oxidation-resistant against the mixed fuel gas at the operating temperature of the fuel cell, or a ceramic having an electro-conductivity. If the anode layer is mainly formed of the oxidation metal at the operating temperature of the fuel cell, such as nickel or nickel cermet, nickel is oxidized during the operation of the fuel cell to increase the electrode resistance, resulting in the deterioration of the power generating efficiency or the impossibility of the power generation. Further, the anode layer 14 is liable to peel off.

In this regard, in the unit fuel cell element 16, the anode layer 14 is formed of metal which is oxidation-resistant against the mixed fuel gas at the operating temperature of the fuel cell or ceramic having an electro-conductivity. Therefore, it is possible to avoid undesirable phenomena during the operation of the fuel cell, such as the deterioration of the power generating efficiency, or the impossibility of power generation, due to the increase in the electrode resistance of the anode layer 14, or to avoid peel-off of the anode layer 14.

The anode layer 14 of such a kind is preferably formed of fired material mainly composed of NiO in which Li is dissolved to form a solid solution. This fired material is an electro-conductive ceramic obtained by adding an Li compound to NiO in a range from 1 to 15 mol% calculated in terms of Li₂O, which is then subjected to the firing treatment.

Further, in the anode layer 14 of the unit fuel cell element 16 shown in Fig. 1, a metal, or an oxide thereof, is blended, which metal is selected from a group of rhodium, platinum, ruthenium, palladium, and iridium. According to the unit fuel cell element 16 having the anode layer 14 in which the above-mentioned metal or an oxide thereof is blended, it is possible to exhibit a power generating performance higher than that of the unit fuel cell element 16 having the anode layer 14 in which rhodium or others or the oxide thereof is not blended.

The metal or oxide thereof selected from a group of rhodium, platinum, ruthenium, palladium, and iridium is preferably blended in the anode layer 14 to be in a range from 1 to 50% by weight calculated in terms of metal.

Also, it is possible to enlarge a contact area of the metal or the oxide thereof selected from a group of rhodium, platinum, ruthenium, palladium, and iridium with the mixed fuel gas by adding, as an auxiliary component for forming the anode layer 14, one of samaria-doped ceria, scandia-stabilized zirconia, and yttria-stabilized zirconia at 50 vol% or less.

The cathode layer 12 and the anode layer 14 for forming the unit fuel cell element 16 for the fuel cell stack shown in Fig. 1 are porous layers having an open porosity of 20% or more, preferably in a range from 30 to 70%, more preferably from 40 to 50%.

The fuel cell including the unit fuel cell elements 16 shown in Fig. 1, in which such porous cathode layer 12 and anode layer 14 are formed, is obtained by placing green sheets formed to have a predetermined shape for the respective layers on the pre-fired solid electrolyte layer 10, or applying pastes for the respective layers to have a predetermined shape, and thereafter firing the assembly of the green sheets or the pastes and the solid electrolyte layer again.

Alternatively, the fuel cell stack may be obtainable by stacking the pre-fired unit fuel cell elements 16, 16 to be integral with each other.

The cathode layer 12 and the anode layer 14 of the unit fuel cell element 16 used for the fuel cell stack shown in Fig. 1 are porous, whereby the mixed fuel gas fed from the feed pipes 20a, 20a can pass through the same.

Accordingly, in the fuel cell shown in Fig. 1, the unit fuel cell elements 16 are accommodated in the container 20 so that the cathode layers 12 and the anode layers 14 are parallel to the flowing direction of the mixed fuel gas fed from the feed pipes 20a, 20a.

Almost all the outer circumference of the unit fuel cell elements is in tight contact with the inner circumference of the container 20 so that the mixed fuel gas fed into the container 20 passes through the cathode layer 12 and the anode layer 14, while preventing the mixed fuel gas fed into the container 20 from flowing in a gap between the inner circumference of the container and the outer circumference of the fuel cell stack.

In this regard, a seal made of non-porous material such as alumina cement or high-melting point glass may be provided in the gap, if necessary, between the inner circumferential wall of the container 20 and the outer circumference of the fuel cell stack.

Spaces 22 and 24 are formed, respectively, between the fuel cell stack accommodated in the container 20 and the feed pipes 20a, 20a, and between the fuel cell stack and the exhaust pipes 20b, 20b. When such spaces 22, 24 are vacant, in order to prevent the mixed fuel gas from igniting at the operating temperature for the fuel cell as high as approximately 1000°C, it is necessary for the oxygen concentration in the mixed fuel gas to be lower the ignition limit (for the concentration of fuel gas such as methane to be higher than the ignition limit).

When the mixed fuel gas to be fed to the fuel cell stack has a low oxygen concentration, there may be a case wherein the fuel gas such as methane in the mixed fuel gas is carbonized to deteriorate the cell performance.

On the contrary, if the oxygen concentration in the mixed fuel gas is so high that no carbonization occurs in the fuel gas, the composition of the mixed fuel gas in the space 22 is within the ignition limit to significantly increase the risk of explosion.

In this regard, in the fuel cell shown in Fig. 1, the spaces 22 and 24 are filled with the packing materials 26 so that a gap between the packing materials 26 and 26 becomes a distance making it impossible to ignite the mixed fuel gas existing in the spaces 22, 24, when the fuel cell is operated, even if the mixed fuel gas has an oxygen concentration (a fuel gas concentration) within the ignition limit.

Particularly, the packing materials are filled so that the gap between the adjacent packing materials 26, 26 is smaller than a "quenching distance" for the mixed fuel gas existing in the spaces 22, 24 having a concentration within the ignition limit.

Thus, even if the mixed fuel gas fed to the container 20 has an increased oxygen concentration at which the mixed fuel gas is ignited, ignition within the spaces 22, 24 can be avoided.

The "quenching distance" as used herein is defined in the "Chemical Handbook, (Applied Chemistry II)", the 2nd Edition, p. 407, edited by the Japanese Chemical Association and published on April 15, 1987, and means a minimum distance between electrodes at which the mixed fuel gas can be ignited. At a distance smaller than this distance, no ignition occurs even if an energy as large as possible is given to the mixed fuel gas.

Since the quenching distance varies in accordance with the oxygen concentration, the pressure or others of the mixed fuel gas, it is preferred that the quenching distance for the mixed fuel gas in the spaces 22, 24 is experimentally determined in advance when the fuel cell is operated.

The gaps between the packing materials filled in the spaces 22, 24 are not uniform but are unevenly distributed. For this reason, there may be a case in which even if the gaps between the packing materials are, on average, smaller than the quenching distance of the mixed fuel gas in the spaces 22, 24, some of the gaps are larger than the quenching distance. In such a case, the ignition of the mixed fuel gas may lead to detonation which can be prevented, even if the mixed fuel gas is ignited, by limiting the maximum gap between the packing materials 26 to a distance equal to or smaller than a quenching diameter for the mixed fuel gas, at which the detonation of the mixed fuel gas in the spaces 22, 24 of the fuel cell can be avoidable.

In this regard, the "quenching diameter" as used herein stands for a critical diameter of a tube below which combustion wave generated by the ignition of the mixed fuel gas blown out of the tube cannot intrude into the tube. For example, the quenching diameter of the mixed fuel gas of methane and oxygen is in a range from 0.1 mm to 3 mm.

As the packing materials 26 to be filled in the spaces 22, 24 of the fuel cell shown in Fig. 1, powdery particles, porous materials or fine tubes, made of a metal or a ceramic which is stable under the operating condition for the fuel cell, may be used.

Preferably, such powdery particles, porous materials or fine tubes may be formed of metal selected from a group consisting of Ti, Cr, Te, Co, Ni, Cu, Al, Mo, Rh, Pd, Ag, W, Pt and Au or an alloy consisting of two or more of them, or may be formed of ceramic comprising one or more selected from a group consisting of Mg, Al, Si and Zr.

It is preferred that the powdery particles have a diameter in a range from 50 to 1000 µm, and the porous material has an open porosity of 50% or more. It is preferred that the fine tube has an inner diameter in a range from 100 to 200 µm. Long fine tubes may be filled in the spaces 22, 24 to be arranged in the flowing direction of the mixed fuel gas, or short fine tubes may be filled at random in the spaces 22, 24.

In this regard, the packing material may also be filled in the feed pipes 20a for feeding the mixed fuel gas to the fuel cell to prevent ignition therein.

The mixed fuel gas is fed to the fuel cell shown in Fig. 1 through a plurality of feed pipes 20a, 20a. By feeding the mixed fuel gas in such a divided manner, ignition of the mixed fuel gas in the feed pipe 20a is avoidable.

The mixed fuel gas fed to the space 22 of the container 20 passes through the gaps between the packing materials 26 filled therein to reach the fuel cell stack and flows through the cathode layer 12 and the anode layer 14 toward the other space 24. During this period, the mixed fuel gas diffuses into the pores of the cathode layers 12 and the anode layers 14, and reaches the surface of the solid electrolyte layer 10.

A combustible gas component such as methane in the mixed fuel gas reaching the surface of the solid electrolyte layer 10 electrochemically reacts with oxygen ions which have passed through the solid electrolyte layer 10 to form water (H₂O), carbon dioxide (CO₂), hydrogen (H₂) and carbon monoxide (CO), while electrons are released from the oxygen ions. The water (H₂O), carbon dioxide (CO₂), hydrogen (H₂) and carbon monoxide (CO) generated by this electrochemical reaction are discharged from the space 24 via the exhaust pipes 20b, 20b.

As the mixed fuel gas travels through the cathode layers 12 and the anode layers 14 of the fuel cell stack, an amount of oxygen decreases, while amounts of water (H₂O), carbon dioxide (CO₂), hydrogen (H₂) and carbon monoxide (CO) increase. If an effective area for the power generation or an efficiency of the fuel cell stack is at a certain level, a combustible mixture may exist in the exhaust side.

To solve such a problem, it is necessary that the space 24 to be filled with exhaust gas is of an anti-explosive structure by filling the packing material 26 therein in the same manner as the space 22.

In this regard, the mixed fuel gas to be fed to the fuel cell may be a mixture of combustible gas, including methane, or any other gas, such as hydrogen gas, ethane, propane or butane, with air.

By feeding such a mixed fuel gas within the ignition limit, the anode layer (fuel pole) 14 is placed in the oxidative atmosphere.

Even though the anode layer 14 is used in the oxidative atmosphere in such a manner and for a long period, the electro-conductivity of the anode layer 14 is properly maintained if it is formed of a fired solid solution mainly composed of NiO in which Li is dissolved, whereby the cell performance is also favorably maintained.

In addition, since a metal selected from a group of rhodium, platinum, ruthenium, palladium, or iridium, or oxide thereof is blended in the anode layer 14, a high power generating capacity is exhibited.

In the fuel cell shown in Fig. 1, as the solid electrolyte layer 10 forming the unit fuel cell element has a dense structure, the fuel cell stack is accommodated in the container 20 so that the cathode layer 12 and the anode layer 14 forming the unit fuel cell element 16 are disposed parallel to the flowing direction of the mixed fuel gas fed from the feed pipes 20a, 20a, and the mixed fuel gas flows through the porous cathode and anode layers 12 and 14 while using them as a passage therefor. According to the fuel cell shown in Fig. 1, there is a tendency in that the sealing is difficult between the outer circumference of the fuel cell stack and the inner circumference of the container.

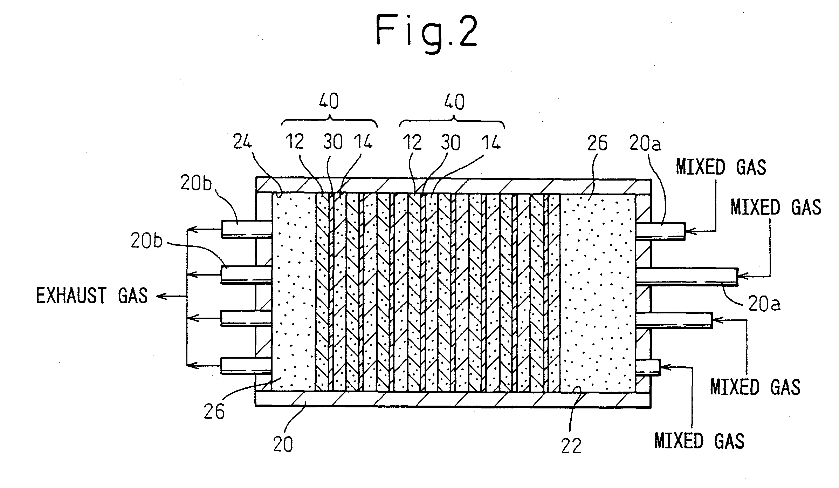

To solve such a problem, a fuel cell shown in Fig. 2 is proposed, in which a fuel cell stack formed of a plurality of unit fuel cell elements 40, 40 is accommodated in a container 20 so that a cathode layer 12 and an anode layer 14 forming the unit fuel cell element 40 are disposed vertical to the flowing direction of mixed fuel gas fed from feed pipes 20a, 20a. According to this fuel cell, sealing is easy between the outer circumference of the fuel cell stack and the inner circumference of the container 20.

In this regard, as it is necessary for the mixed fuel gas to pass through the fuel cell stack, the cathode layer 12, the anode layer 14 and the solid electrolyte layer 30 in the unit fuel cell element 40 are made of porous material. The fuel cell stack shown in Fig. 2 is obtainable by simultaneously firing a stack of green sheets formed to have a predetermined shape for the respective layers. Accordingly, the fuel cell stack shown in Fig. 2 is obtainable at a lower production cost in comparison with the fuel cell stack shown in Fig. 1 produced by placing green sheets formed to have a predetermined shape for the respective layers on the pre-fired solid electrolyte layer 10, or applying pastes for the respective layers to have a predetermined shape, and thereafter firing the assembly of the green sheets or the pastes and the solid electrolyte layer again.

In this regard, in Fig. 2, the same parts as in the fuel cell shown in Fig. 1 are denoted by the same reference numerals as used in Fig. 1, and a detailed description thereof is eliminated.

The mixed fuel gas fed from the feed pipes 20a, 20a of the fuel cell shown in Fig. 2 drives the electrochemical reaction while flowing through the porous cathode and anode layers 12, 14 and the solid electrolyte layer 30, and is discharged from the exhaust pipes 20b, 20b.

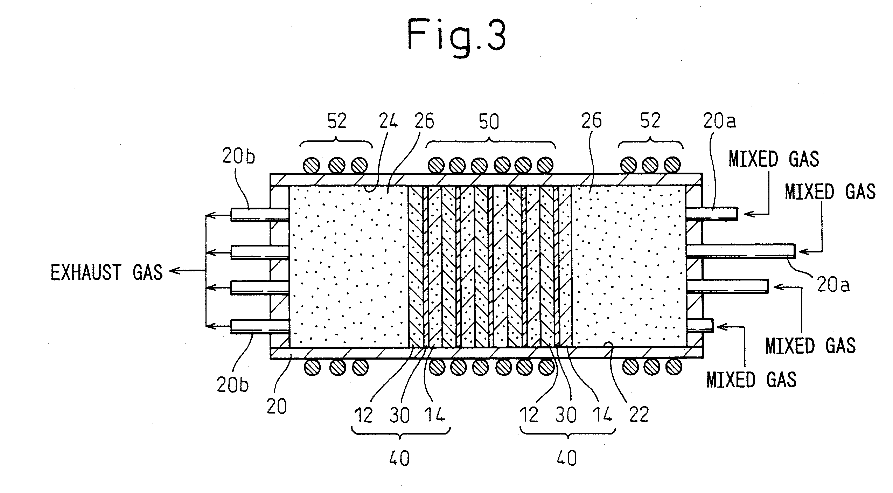

The fuel cells shown in Figs. 1 and 2 generate electricity while being placed, as a whole, in an atmosphere having a predetermined temperature. However, as shown in Fig. 3, a heater 50 may be provided for heating a portion of the container in which the fuel cell stack is accommodated, and cooling pipes 52 may be provided for cooling the spaces 22, 24 filled with the packing materials 26 in the vicinity of the fuel cell stack. By cooling the mixed fuel gas in the spaces 22, 24 in such a manner, it is possible to enlarge the "quenching diameter" of the mixed fuel gas in the spaces 22, 24.

When the spaces 22, 24 are forcibly cooled in such a manner, the packing material 26 filled in the spaces 22, 24 is preferably made of a metal having a high thermal conductivity.

In this regard, in Fig. 3, the same parts as in the fuel cells shown in Figs. 1 and 2 are denoted by the same reference numerals as used in the latter, and a detailed description thereof is eliminated.

In the above-mentioned description, the anode 14 is formed of a fired material mainly composed of NiO in which Li is dissolved to form a solid solution. Such a fired material originally exhibits a power generating performance.

A fuel cell exhibiting a high power generating performance may be obtained by forming an anode layer 14 with metal which is oxidation-resistant to the mixed fuel gas metal but having no power generating performance at the operating temperature of the fuel cell, such as silver, in place of the fired material mentioned above, provided that rhodium, platinum, ruthenium, palladium, or iridium or oxide thereof is blended to the anode layer 14. It is surmised that this is because the redox reaction occurs between the fuel gas and oxygen due to the catalytic activity of rhodium, platinum, ruthenium, palladium, or iridium or oxide thereof to generate the electro-motive force.

Also, a fuel cell exhibiting a high power generating performance may be obtained by forming an anode layer 14 mainly consisting of samaria-doped ceria (SDC) having no electro-conductivity, provided that rhodium, platinum, ruthenium, palladium, or iridium or oxide thereof is blended to the anode layer 14.

For example, when mixed fuel gas having a mixture ratio of butane and air within the combustible range (butane; 1.8 to 8.4 vol%) was fed to a unit fuel cell element in which an anode layer formed of samaria-doped ceria (SDC) and Pt and a cathode layer formed of La_{0.8} Sr_{0.2} MnO₃ added with SDC of 40% by weight are respectively bonded to both sides of a solid electrolyte layer formed of SDC, an open circuit voltage of 520 mV was measured at a temperature of 500°C in the vicinity of the outer circumference of the unit fuel cell element.

The present invention will be described in more detail below with reference to Examples.

### (Example 1)

### (1) Laboratory equipment

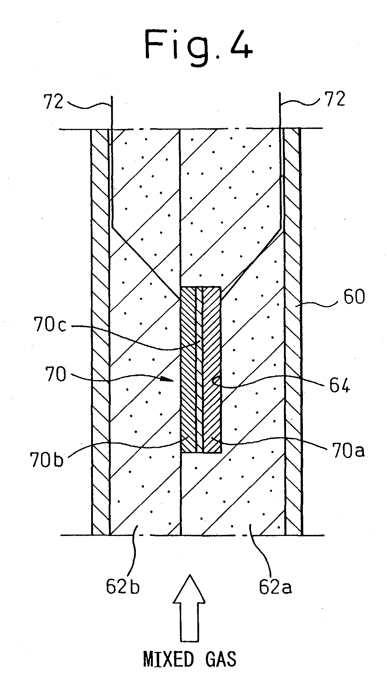

The laboratory equipment used for this Example is shown in Fig. 4. In the laboratory equipment shown in Fig. 4, splittable porous ceramic materials 62a, 62b made of alumina are inserted into a ceramic tube 60 made of alumina. There is a recess 64 on a surface of the porous ceramic material 62a in contact with the porous ceramic material 62b. A unit fuel cell element 70 is inserted in the recess 64, which is formed of an anode layer 70a and a cathode layer 70b placed on both sides of the solid electrolyte layer 70c, respectively.

One end of each platinum leads 72, 72 is welded to the anode layer 70a and the cathode layer 70b, respectively, of the unit fuel cell element 70 inserted in the recess 64, and the other end of each the platinum leads 72, 72 is drawn out through the porous ceramic materials 62a, 62b.

The ceramic tube 60 in which the porous ceramic materials 62a, 62b accommodating the unit fuel cell element 70 in the recess 64 is inserted as shown in Fig. 4 is heated in a small-sized electric furnace at a predetermined temperature, while feeding the mixed fuel gas of butane as a fuel gas and air from one side of the ceramic tube 60. Under such a condition, electric current generated from the unit fuel cell element 70 was measured using the platinum leads 72, 72.

### (2) Preparation of unit fuel cell element

Pastes for the cathode and the anode of a predetermined shape are printed on both sides, respectively, of the solid electrolyte substrate made of samaria-doped ceria (SDC) over an area of approximately 1 cm².

The paste for the cathode is composed of La_{0.8}Sr_{0.2}MnO₃ added with SDC of 40% by weight, while the paste for the anode is composed of Li₂O-NiO added with Rh₂O₃.

The anode paste was prepared by adding Li₂CO₃ powder of 8 mol% to NiO powder, which mixture was fired at 1200°C for 2 hours in air and crushed into powder which was then added with Rh₂O₃ powder of 5% by weight, a binder and turpeneol to become a paste.

Then, platinum meshes welded to one end of each of the platinum leads 72, 72, respectively, are embedded in the cathode paste and the anode paste printed on the both sides of the solid electrolyte substrate, respectively, and thereafter the assembly was fired in air at 1200°C to result in a unit fuel cell element 70.

The resultant unit fuel cell element 70 has, on both sides of a solid electrolyte layer 70c made of SDC, an anode layer 70a made of Li₂O-NiO added with Rh₂O₃ of 5% by weight and a cathode layer 70b made of La_{0.8}Sr_{0.2}MnO₃ added with SDC of 40% by weight.

### (3) Power generating performance

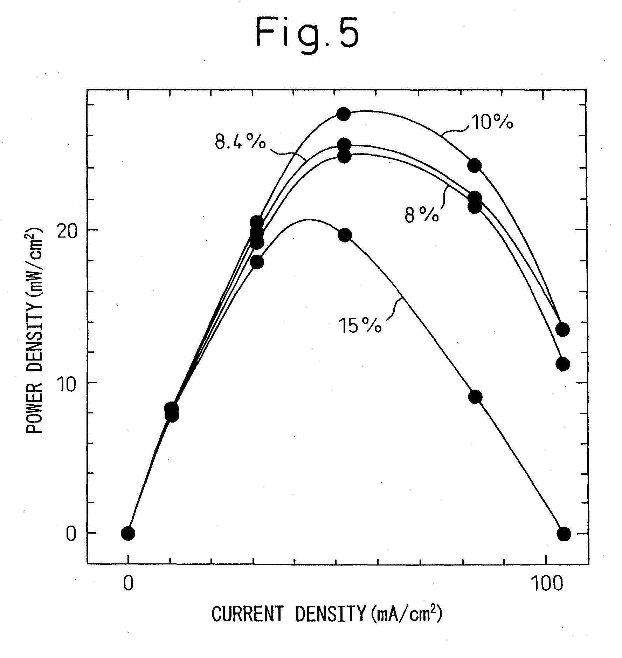

(a) The resultant unit fuel cell element 70 was set as shown in Fig. 4, and a mixed fuel gas (in which a mixing ratio of butane and air was adjusted to be within the combustion range (butane concentration; 1.8 to 8.4 vol%)) was introduced from one side the ceramic tube 60. Under these conditions, the temperature in the vicinity of the outer circumference of the ceramic tube 60, the magnitude of generated current and the open circuit voltage were measured. The magnitude of generated current is a magnitude of short-circuited current flowing when the platinum leads 72, 72 are brought into contact with each other.
   As a result, the generated current was 8.5 mA at 327°C and 80.1 mA at 475°C in the vicinity of the outer circumference of the ceramic tube 60. On the other hand, the open circuit voltage was 590 mV at 410°C and 855 mV at 555°C in the vicinity of the outer circumference of the ceramic tube 60.
(b) The butane concentration in the mixed fuel gas was changed to a range 8-15 vol%, and a power density relative to a current density was measured, results of which are shown in Fig. 5. As apparent from Fig. 5, when the butane concentration is 10 vol%, the power density becomes a maximum.

### (Example 2)

A unit fuel cell element 70 was prepared in the same manner as in Example 1, except that an anode paste was prepared by adding Li₂CO₃ powder of 8 mol% to NiO powder, which mixture was fired at 1200°C for 2 hours in air and crushed into powder which was then added with Pt of 50% by weight, a binder and turpeneol to be a paste.

The resultant unit fuel cell element 70 has, on both sides of a solid electrolyte layer 70c made of SDC, an anode layer 70a made of fired Li₂O-NiO added with Pt of 50% by weight and a cathode layer 70b made of La_{0.8}Sr_{0.2}MnO₃ added with SDC of 40% by weight.

The resultant unit fuel cell element 70 was set in the same manner as in Example 1, and a mixed fuel gas (in which a mixing ratio of butane and air was adjusted to be within the combustion range (butane concentration; 1.8 to 8.4 vol%)) was introduced from one side the ceramic tube 60. Under these conditions, the temperature in the vicinity of the outer circumference of the ceramic tube 60, the magnitude of generated current and the open circuit voltage were measured.

As a result, the generated current was 7.0 mA at 330°C and 94.4 mA at 422°C in the vicinity of the outer circumference of the ceramic tube 60. On the other hand, the open circuit voltage was 630 mV at 372°C in the vicinity of the outer circumference of the ceramic tube 60.

### (Example 3)

A unit fuel cell element 70 was prepared in the same manner as in Example 1, except that an anode paste was prepared by adding Li₂CO₃ powder of 8 mol% to NiO powder, which mixture was fired at 1200°C for 2 hours in air and crushed into powder which was then added with RuO₂ of 1% by weight, a binder and turpeneol to be a paste.

The resultant unit fuel cell element 70 has, on both sides of a solid electrolyte layer 70c made of SDC, an anode layer 70a made of fired Li₂O-NiO added with RuO₂ of 1% by weight and a cathode layer 70b made of La_{0.8}Sr_{0.2}MnO₃ added with SDC of 40% by weight.

The resultant unit fuel cell element 70 was set in the same manner as in Example 1, and a mixed fuel gas (in which a mixing ratio of butane and air was adjusted to be within the combustion range (butane concentration; 1.8 to 8.4 vol%)) was introduced from one side the ceramic tube 60. Under these conditions, the temperature in the vicinity of the outer circumference of the ceramic tube 60, the magnitude of generated current and the open circuit voltage were measured.

As a result, the generated current was 1.9 mA at 330°C and 36.1 mA at 464°C in the vicinity of the outer circumference of the ceramic tube 60. On the other hand, the open circuit voltage was 502 mV at 300°C in the vicinity of the outer circumference of the ceramic tube 60.

### (Example 4)

A unit fuel cell element 70 was prepared in the same manner as in Example 1, except that an anode paste was prepared by adding Li₂CO₃ powder of 8 mol% to NiO powder, which mixture was fired at 1,200°C for 2 hours in air and crushed into powder which was then added with PdO of 5% by weight, a binder and turpeneol to be a paste.

The resultant unit fuel cell element 70 has, on both sides of a solid electrolyte layer 70c made of SDC, an anode layer 70a made of fired Li₂O-NiO added with PdO of 5% by weight and a cathode layer 70b made of La_{0.8}Sr_{0.2}MnO₃ added with SDC of 40% by weight.

The resultant unit fuel cell element 70 was set in the same manner as in Example 1, and a mixed fuel gas (in which a mixing ratio of butane and air was adjusted to be within the combustion range (butane concentration; 1.8 to 8.4 vol%)) was introduced from one side the ceramic tube 60. Under these conditions, the temperature in the vicinity of the outer circumference of the ceramic tube 60, the magnitude of generated current and the open circuit voltage were measured.

As a result, the generated current was 0.6 mA at 320°C and 32.4 mA at 331°C in the vicinity of the outer circumference of the ceramic tube 60. On the other hand, the open circuit voltage was 297 mV at 336°C in the vicinity of the outer circumference of the ceramic tube 60.

### (Example 5)

A unit fuel cell element 70 was prepared in the same manner as in Example 1, except that an anode paste was prepared by adding Li₂CO₃ powder of 8 mol% to NiO powder, which mixture was fired at 1200°C for 2 hours in air and crushed into powder which was then added with Re of 5% by weight, a binder and turpeneol to be a paste.

The resultant unit fuel cell element 70 has, on both sides of a solid electrolyte layer 70c made of SDC, an anode layer 70a made of fired Li₂O-NiO added with Re of 5% by weight and a cathode layer 70b made of La_{0.8}Sr_{0.2}MnO₃ added with SDC of 40% by weight.

The resultant unit fuel cell element 70 was set in the same manner as in Example 1, and a mixed fuel gas (in which a mixing ratio of butane and air was adjusted to be within the combustion range (butane concentration; 1.8 to 8.4 vol%)) was introduced from one side the ceramic tube 60. Under these conditions, the temperature in the vicinity of the outer circumference of the ceramic tube 60, the magnitude of generated current and the open circuit voltage were measured.

As a result, the generated current was 1.7 mA at 304°C and 19.6 mA at 395°C in the vicinity of the outer circumference of the ceramic tube 60. On the other hand, the open circuit voltage was 312 mV at 429°C in the vicinity of the outer circumference of the ceramic tube 60.

### (Comparative example 1)

A unit fuel cell element 70 was prepared in the same manner as in Example 1, except that an anode paste added with no PdO was used.

The resultant unit fuel cell element 70 has, on both sides of a solid electrolyte layer 70c made of SDC, an anode layer 70a made of fired Li₂O-NiO and a cathode layer 70b made of La_{0.8}Sr_{0.2}MnO₃ added with SDC of 40% by weight.

The resultant unit fuel cell element 70 was set in the same manner as in Example 1, and a mixed fuel gas (in which a mixing ratio of butane and air was adjusted to be within the combustion range (butane concentration; 1.8 to 8.4 vol%)) was introduced from one side the ceramic tube 60. Under these conditions, the temperature in the vicinity of the outer circumference of the ceramic tube 60, the magnitude of generated current and the open circuit voltage were measured.

As a result, the generated current was 33 mA at 500°C in the vicinity of the outer circumference of the ceramic tube 60. On the other hand, the open circuit voltage was 386 mV at 500°C in the vicinity of the outer circumference of the ceramic tube 60.

### (Example 6)

A unit fuel cell element 70 was prepared in the same manner as in Example 1, except that an anode paste which is an Ag paste added with IrO₂ of 10% by weight was used.

The resultant unit fuel cell element 70 has, on both sides of a solid electrolyte layer 70c made of SDC, an anode layer 70a made of Ag added with IrO₂ of 10% by weight and a cathode layer 70b made of La_{0.8}Sr_{0.2}MnO₃ added with SDC of 40% by weight.

The resultant unit fuel cell element 70 was set in the same manner as in Example 1, and a mixed fuel gas (in which a mixing ratio of butane and air was adjusted to be within the combustion range (butane concentration; 1.8 to 8.4 vol%)) was introduced from one side the ceramic tube 60. Under these conditions, the temperature in the vicinity of the outer circumference of the ceramic tube 60, the magnitude of generated current and the open circuit voltage were measured.

As a result, the generated current was 42 mA at 700°C in the vicinity of the outer circumference of the ceramic tube 60. On the other hand, the open circuit voltage was 503 mV at 700°C in the vicinity of the outer circumference of the ceramic tube 60.

### (Example 7)

A unit fuel cell element 70 was prepared in the same manner as in Example 1, except that an anode paste which is an Ag paste added with PdO of 5% by weight was used.

The resultant unit fuel cell element 70 has, on both sides of a solid electrolyte layer 70c made of SDC, an anode layer 70a made of Ag added with PdO of 5% by weight and a cathode layer 70b made of La_{0.8}Sr_{0.2}MnO₃ added with SDC of 40% by weight.

The resultant unit fuel cell element 70 was set in the same manner as in Example 1, and a mixed fuel gas (in which a mixing ratio of butane and air was adjusted to be within the combustion range (butane concentration; 1.8 to 8.4 vol%)) was introduced from one side the ceramic tube 60. Under these conditions, the temperature in the vicinity of the outer circumference of the ceramic tube 60, the magnitude of generated current and the open circuit voltage were measured.

As a result, the generated current was 12 mA at 700°C in the vicinity of the outer circumference of the ceramic tube 60. On the other hand, the open circuit voltage was 330 mV at 700°C in the vicinity of the outer circumference of the ceramic tube 60.

### (Example 8)

A unit fuel cell element 70 was prepared in the same manner as in Example 1, except that an anode paste which is an Ag paste added with Re of 5% by weight was used.

The resultant unit fuel cell element 70 has, on both sides of a solid electrolyte layer 70c made of SDC, an anode layer 70a made of Ag added with Re of 5% by weight and a cathode layer 70b made of La_{0.8}Sr_{0.2}MnO₃ added with SDC of 40% by weight.

The resultant unit fuel cell element 70 was set in the same manner as in Example 1, and a mixed fuel gas (in which a mixing ratio of butane and air was adjusted to be within the combustion range (butane concentration; 1.8 to 8.4 vol%)) was introduced from one side the ceramic tube 60. Under these conditions, the temperature in the vicinity of the outer circumference of the ceramic tube 60, the magnitude of generated current and the open circuit voltage were measured.

As a result, the generated current was 8 mA at 700°C in the vicinity of the outer circumference of the ceramic tube 60. On the other hand, the open circuit voltage was 391 mV at 700°C in the vicinity of the outer circumference of the ceramic tube 60.

### (Comparative example 2)

A unit fuel cell element 70 was prepared in the same manner as in Example 1, except that an anode layer 70a formed of Ni cermet containing PdO of 5% by weight and SDC of 30% by weight was used.

The resultant unit fuel cell element 70 was set in the same manner as in Example 1, and a mixed fuel gas (in which a mixing ratio of butane and air was adjusted to be within the combustion range (butane concentration; 1.8 to 8.4 vol%)) was introduced from one side the ceramic tube 60. Under these conditions, the measurement of a temperature in the vicinity of the outer circumference of the ceramic tube 60 and a magnitude of generated current was attempted.

However, since the electro-conductivity of the anode layer 70a was deteriorated before the temperature in the vicinity of the outer circumference of the ceramic tube 60 reaches the operating temperature of the unit fuel cell element 70, power generation became impossible. The experiment was halted thereafter.

### (Comparative example 3)

A unit fuel cell element 70 was prepared in the same manner as in Example 1, except that an anode paste which is an Ag paste added with none of other metal was used.

The resultant unit fuel cell element 70 has, on both sides of a solid electrolyte layer 70c made of SDC, an anode layer 70a solely made of Ag and a cathode layer 70b made of La_{0.8}Sr_{0.2}MnO₃ added with SDC of 40% by weight.

The resultant unit fuel cell element 70 was set in the same manner as in Example 1, and a mixed fuel gas (in which a mixing ratio of butane and air was adjusted to be within the combustion range (butane concentration; 1.8 to 8.4 vol%)) was introduced from one side the ceramic tube 60. Under these conditions, the temperature in the vicinity of the outer circumference of the ceramic tube 60 and the open circuit voltage were measured.

As a result, the open circuit voltage was -72 mV at 414°C in the vicinity of the outer circumference of the ceramic tube 60, which means that the normal power generation is impossible.

According to the present invention, it is possible to provide a fuel cell having a high power generating performance capable of maintaining the favorable electro-conductivity as well as keeping the fuel pole function even under conditions in which partial pressure of oxygen becomes higher on the fuel pole (anode layer) side and therefore the electrode metal is liable to be oxidized.

## Claims

1. A fuel cell comprising:
at least one fuel cell element (16), comprising a solid electrolyte layer (10) of oxygen ion conduction type which is interposed between a cathode layer (12) and an anode layer (14);
means for supplying a mixed fuel gas of fuel gas, such as methane or others, and oxygen, to which both the cathode layer (12) and the anode layer (14) are exposed to cause an oxidation-reduction reaction between the fuel gas and the oxygen by means of the cell element (16) to generate an electromotive force;
the anode layer (14) being mainly composed of a metal which is oxidation-resistant against the mixed fuel at an operating temperature of the fuel cell element (16), or a ceramic having electro-conductivity; and,
the anode layer (14) being further blended with a metal, or an oxide thereof, selected from a group of rhodium, platinum, ruthenium, palladium, and iridium.

2. A fuel cell according to claim 1, wherein the anode layer (14) is formed of fired material mainly composed of NiO in which Li is dissolved to form a solid solution.

3. A fuel cell according to claim 2, wherein the fired material is obtained by adding an Li-compound to Ni-oxide, which is then subjected to firing treatment.

4. A fuel cell according to claim 2 or 3, wherein the fired material is a fired body obtained by firing Ni oxide to which an Li-compound is added in a range from 1 to 15 mol% calculated in terms of Li₂O.

5. A fuel cell according to any one of the preceding claims, wherein the anode (14) is mainly composed of silver.

6. A fuel cell according to any one of the preceding claims, wherein the metal, or an oxide thereof, selected from rhodium, platinum, ruthenium, palladium, and iridium, is blended in the anode layer (14) in a range from 1 to 50 vol% calculated in terms of metal.

7. A fuel cell according to any one of the preceding claims, wherein the anode layer (14) contains, as an auxiliary component, one of samaria-doped ceria, scandia-stabilized zirconia, and yttria-stabilized zirconia at 50 vol% or less.

8. A fuel cell comprising:
a container (20) having at least one feed port (20a) and at least one exhaust port (20b);
a stack of fuel cell elements (16) in accordance with any one of the preceding claims, contained in the container (20) ,
the means for supplying a mixed fuel gas of fuel gas, such as methane or others, and oxygen, being fed through the feed port (20a), and exhaust gas being discharged through the exhaust port (20b).

9. A fuel cell according to claim 8, wherein the container (20) defines therein first and second spaces (22,24), except for a region where the stack of fuel cell elements (16) are, the feed and exhaust ports (20a,b) being communicated with the first and second spaces (22,24), respectively; and,
the first and second spaces being filled with packing materials (26), so that a gap between the materials is a distance making it impossible to ignite the mixed fuel gas even if fuel gas has an oxygen concentration within an ignition limit.

10. A fuel cell according to claim 15, wherein the packing materials (26) are powdery particles, porous materials, or fine tubes, formed of a metal selected from a group of Ti, Cr, Te, Co, Ni, Cu, Al, Mo, Rh, Pd, Ag, W, Pt and Au or an alloy consisting two or more of them, or a ceramic containing one or more selected from a group consisting of Mg, Al, Si and Zr.

11. A fuel cell according to claim 8, 9 or 10, wherein the stack of fuel cell elements (16) is accommodated in the container (20) so that the cathode layer (12) and the anode layer (14) forming each fuel cell element (16) are disposed parallel to a flowing direction of the mixed fuel gas; or wherein the a stack of fuel cell elements (16) is accommodated in the container (20) so that the cathode layer (12) and the anode layer (14) forming each fuel cell element (16) are disposed perpendicular to a flowing direction of the mixed fuel gas.

12. A fuel cell according to claim 11, wherein the cathode layer (12), the anode layer (14) and the solid electrolyte layer (10) are made of porous material.

13. A fuel cell according to any of claims 9 to 12, further comprising a heating means for heating the stack of fuel cell elements (16) and cooling means for cooling the first and second spaces (22,24).
